# FASCICULE DE BREVET EUROPEEN

(11) **EP 1 413 780 B1**
(45) Date de publication et mention de la délivrance du brevet: **03.08.2005**
(21) Numéro de dépôt: 03292494.6
(22) Date de dépôt: 09.10.2003
(51) Int. Cl.: F16C 7/04, B60K 5/12

(54) **Biellette antivibratoire**
Schwingungsdämpfendes Verbindungsglied
Antivibration connecting rod

(30) Priorité: 21.10.2002 FR 0213108
(43) Date de publication de la demande: 28.04.2004
(73) Titulaire: HUTCHINSON, 75008 Paris (FR)
(72) Inventeur: Compain, Laurent, 45770 Saran (FR)
(74) Mandataire: Burbaud, Eric

(56) Documents cités:
- EP-A- 0 647 787
- FR-A- 2 794 502
- FR-A- 2 794 503

## Description

La présente invention est relative aux biellettes antivibratoires, utilisées notamment dans le domaine de l'automobile, par exemple pour la reprise de couple des blocs motopropulseurs.

Plus particulièrement, l'invention concerne une biellette antivibratoire destinée à isoler deux pièces et comprenant un corps rigide s'étendant selon une direction longitudinale entre une première extrémité munie d'un manchon et une deuxième extrémité, une première articulation antivibratoire agencée dans ledit manchon et présentant un axe central perpendiculaire à la direction longitudinale dudit corps, et une deuxième articulation antivibratoire agencée sur ladite deuxième extrémité et présentant un axe central perpendiculaire à l'axe central de la première articulation et perpendiculaire à la direction longitudinale du corps.

Le corps des biellettes de ce type, dont les articulations antivibratoires présentent des axes perpendiculaires entre eux, est le plus souvent constitué par une pièce métallique obtenue par moulage. Une telle pièce étant relativement onéreuse, on a cherché à réaliser le corps des biellettes avec une tôle vrillée ou pliée.

Par exemple, le document FR-A-2 794 502 décrit une biellette réalisée en tôle et comprenant deux manchons dans lesquels sont insérées deux articulations antivibratoires qui sont formées d'une armature centrale en acier solidaire d'une bague extérieure par l'intermédiaire d'un corps en élastomère. Le premier manchon est réalisé à une première extrémité relativement plane de la tôle et le deuxième manchon est réalisé dans deux ailes latérales repliées l'une contre l'autre qui forment une deuxième extrémité du corps de la biellette. Les articulations antivibratoires sont montées dans le corps de la biellette par emmanchement à force de leur bague extérieure dans les manchons.

Ce type de biellette qui nécessite des opérations d'emboutissage, de pliage et de montage par emmanchement à force, reste relativement onéreux.

Le but de la présente invention est de pallier les inconvénients des biellettes de l'art antérieur en proposant une biellette antivibratoire dont le coût, lié aux opérations de fabrication et à la quantité de matière utilisée, est particulièrement bas, tout en présentant une bonne rigidité.

A cet effet, selon l'invention, une biellette du genre en question est caractérisée en ce que la deuxième extrémité dudit corps comporte deux branches s'étendant à l'opposé du manchon depuis une partie intermédiaire du corps selon la direction longitudinale du corps et reliées entre elles par un pontet s'étendant selon ledit axe central de la deuxième articulation, ladite deuxième articulation étant agencée autour dudit pontet.

Grâce à ces dispositions, le corps de la biellette peut être réalisé simplement à moindre coût.

D'autre part, le coût de fabrication de la deuxième articulation est fortement réduit. En effet, l'armature centrale de la deuxième articulation est formée par le pontet du corps de la biellette. De plus, cette articulation qui n'est pas montée par emmanchement à force, ne nécessite pas une bague extérieure.

Dans des formes de réalisation préférées de l'invention, on peut avoir recours, en outre, à l'une et/ou à l'autre des dispositions suivantes :
- la deuxième articulation comprend un corps en élastomère surmoulé sur le pontet ;
- le pontet présente une région centrale encadrée par deux régions latérales, ladite région centrale présentant une section transversale supérieure à la section transversale des régions latérales, la deuxième articulation entourant ladite région centrale ;
- le pontet est situé à une distance d de la partie intermédiaire du corps, ladite distance d étant adaptée pour ménager un espace libre entre la deuxième articulation et ladite partie intermédiaire ;
- la deuxième articulation comporte un corps en élastomère qui présente, par rapport à son axe central, une section transversale adaptée pour être emprisonnée entre le creux d'une fourche solidaire d'une des pièces à isoler et une chape montée amovible sur les extrémités de ladite fourche ;
- la section transversale de la deuxième articulation présente un contour en D ;
- le corps est formé par au moins une tôle comportant deux branches et un pontet qui forment au moins une partie des branches et du pontet du corps de la biellette ;
- le manchon de la première extrémité du corps est perpendiculaire au plan moyen de la tôle et le pontet de la deuxième extrémité du corps est compris dans le plan moyen de la tôle ;
- le corps est formé de deux tôles, chaque tôle présentant une première face sensiblement plane, une première extrémité comportant un manchon qui s'étend perpendiculairement depuis une deuxième face de ladite tôle, et une deuxième extrémité comportant deux branches reliées par un pontet, lesdites premières faces planes des tôles étant disposées l'une contre l'autre et les deux tôles étant solidarisées pour former ledit corps ;
- au moins l'une des deux tôles comprend au moins une languette venue de matière depuis une région centrale du pontet de ladite tôle et rabattue sur ledit pontet contre la deuxième face de ladite tôle ;
- au moins l'une des deux tôles comprend des bossages s'étendant le long des deux branches de ladite tôle et faisant saillie sur la deuxième face de ladite tôle ;
- au moins l'une des deux tôles comporte des languettes venues de matière depuis le bord de ladite tôle et rabattues contre la deuxième face de la tôle adjacente ;
- le corps est entièrement surmoulé par un élastomère.

D'autres caractéristiques et avantages de l'invention apparaîtront au cours de la description qui va suivre, donnée à titre d'exemple non limitatif, en référence aux dessins annexés dans lesquels :
- la figure 1 est une vue en perspective d'une biellette antivibratoire réalisée selon invention ;
- la figure 2 est une vue en perspective d'un corps brut de la biellette représentée à la figure 1 ;
- la figure 3 est une vue en perspective de la biellette représentée à la figure 1 et dont une articulation est montée dans un support.

Sur les différentes figures on a conservé les mêmes références pour désigner des éléments identiques ou similaires.

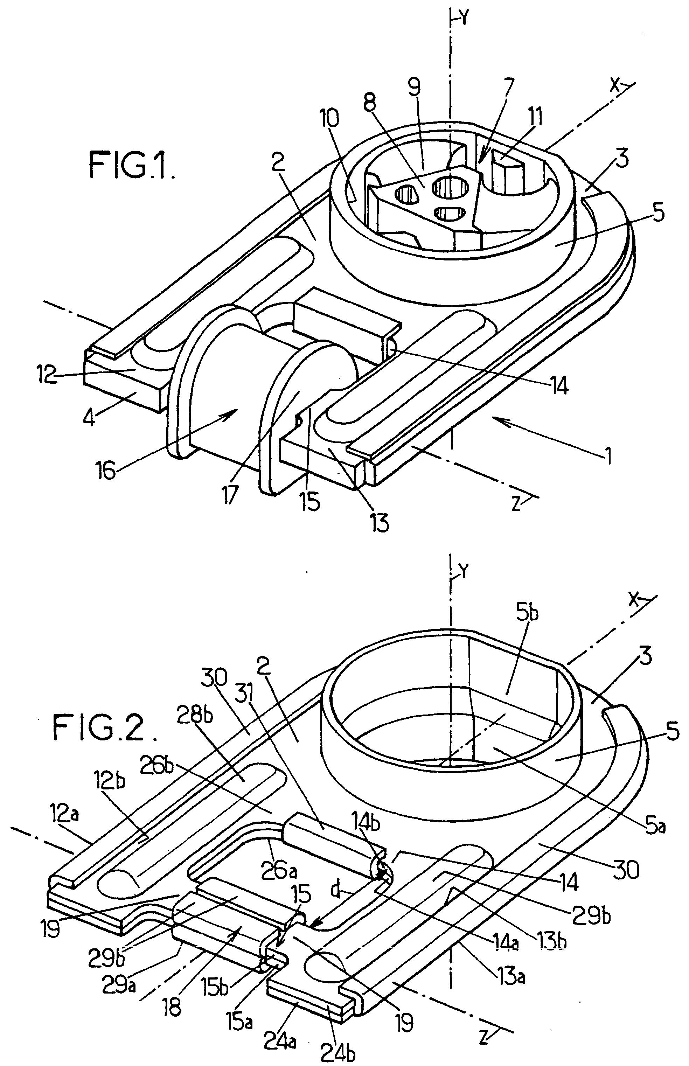

Comme représenté sur la figure 1, l'invention concerne une biellette antivibratoire 1 destinée par exemple à la reprise de couple d'un bloc motopropulseur de véhicule (non représenté).

Cette biellette antivibratoire 1 comprend un corps rigide 2, réalisé par exemple en acier, s'étendant selon une direction longitudinale X entre une première extrémité 3 et une deuxième extrémité 4.

La première extrémité 3 comporte un manchon 5 dans lequel est agencée une première articulation antivibratoire 7. L'articulation 7 présente une armature métallique intérieure 8 qui forme un axe central Y perpendiculaire à la direction longitudinale X du corps 2. Un corps en élastomère 9, dont la forme géométrique est adaptée pour amortir des vibrations, est solidaire de l'armature intérieure 8 par adhésion. Le corps en élastomère 9 est également solidaire d'une bague 10 emmanchée à force dans le manchon 5.

Toutefois, il est possible de mouler le corps en élastomère 9 lorsque l'armature intérieure 8 est placée dans le manchon 5, ainsi que le corps en élastomère adhère directement à la paroi interne du manchon 5.

La bague 10 de la première articulation peut comporter des butées 11 en élastomère pour limiter les débattements de l'armature intérieure 8.

La deuxième extrémité 4 du corps de la biellette présente deux branches (12,13) qui s'étendent à l'opposé du manchon 5, depuis une partie intermédiaire 14, ou base, du corps 2, selon la direction longitudinale X du corps 2. Les deux branches (12,13) sont reliées par un pontet 15 qui s'étend selon un axe Z perpendiculaire à l'axe longitudinal X et perpendiculaire à l'axe central Y de la première articulation 7.

Une deuxième articulation 16 est agencée autour du pontet 15 et l'axe Z du pontet forme l'axe central de la deuxième articulation 16.

Ainsi, la biellette présente des axes centraux d'articulation Y, Z perpendiculaires et peut être réalisée à partir d'une tôle sans nécessiter d'opération de pliage ou de vrillage.

De plus, le pontet 15 constitue une armature intérieure, ce qui permet de réduire le nombre de pièces nécessaires à la réalisation de la deuxième articulation 16.

La deuxième articulation 16 comprend un corps en élastomère 17 surmoulé directement sur le pontet 15, ceci simplifie le montage de la deuxième articulation 16.

Comme on peut le voir sur la figure 2 qui représente le corps 2 brut de la biellette avant montage des articulations antivibratoires, le pontet 15 présente une région centrale 18 de section transversale, par rapport à l'axe Z, supérieure par rapport à la section transversale des régions latérales adjacentes 19 du pontet.

Cette surépaisseur dans la région centrale 18 du pontet, dont la réalisation sera détaillée ci-après, permet une bonne accroche du corps en élastomère 17 surmoulé sur cette région centrale et interdit toute translation du corps en élastomère le long du pontet 15. Elle permet également d'obtenir une épaisseur d'élastomère souhaitée et donc une raideur souhaitée de l'articulation, pour un diamètre extérieur donné du corps 17.

Le pontet 15 est situé à une distance d, représentée sur la figure 2, de la partie intermédiaire 14 qui forme la base des deux branches (12,13). Ladite distance d étant choisie pour ménager une espace libre entre la deuxième articulation 16 et ladite parie intermédiaire 14.

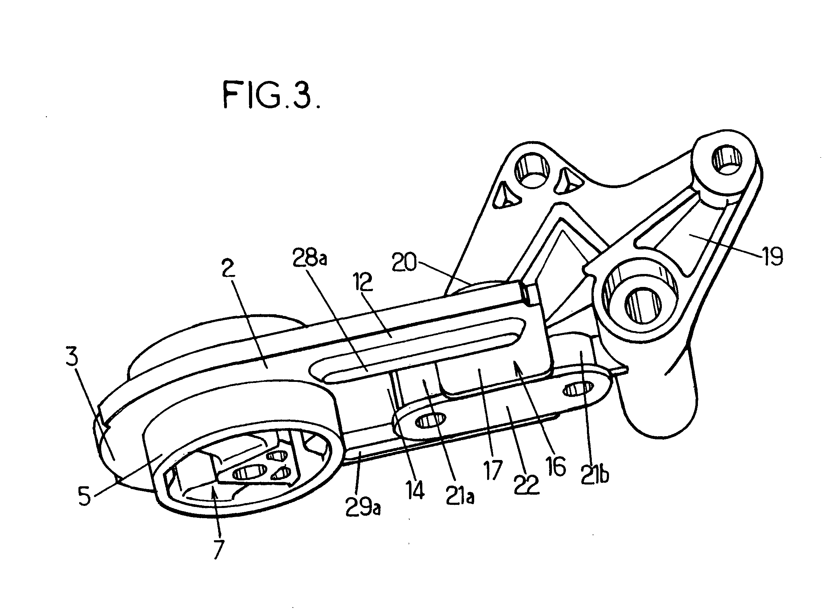

En effet, et comme on peut le voir à la figure 3, cet espace libre permet le passage d'un support 19 sur lequel est fixée la deuxième articulation 16. Le support 19 est par ailleurs fixé sur une des pièces à isoler, non représentée sur la figure 3, par exemple un bloc motopropulseur.

Le support 19 comporte une fourche 20 présentant deux extrémités (21a,21b) qui délimitent un creux en forme de U. Une chape 22, plane dans le mode de réalisation représenté, est montée de façon amovible à l'aide de boulons, non représentés, sur les extrémités (21a,21b) de la fourche de manière à fermer le creux en U.

La section transversale, par rapport à l'axe Z, du corps en élastomère 17 de la deuxième articulation 16 présente un contour extérieur adapté pour être emprisonné entre le creux de la fourche 20 et la chape 22.

La section transversale du corps en élastomère 17 présente un contour en D, c'est-à-dire qu'une partie destinée à venir en contact avec la chape 22 est plane, pour interdire toute rotation du support 19 par rapport à la deuxième articulation 16.

Le corps 2 de la biellette est réalisé par une tôle qui est emboutie pour former notamment le manchon 5 de la première extrémité 3. L'emboutissage permet d'obtenir un manchon 5 présentant un axe longitudinal perpendiculaire au plan moyen de la tôle et confondu avec l'axe central Y de la première articulation 7. Le pontet 15 qui forme l'axe central Z de la deuxième articulation 16, est quant à lui compris dans le plan moyen de la tôle.

On notera toutefois que le fait que le pontet 15 du corps 2 forme à la fois l'armature interne de la deuxième articulation 16 et un support pour le montage de celle-ci, permet de réduire le coût de la fabrication de la biellette même si le corps 2 n'est pas une tôle emboutie, mais par exemple une pièce en aluminium moulé ou extrudé, ou encore une pièce en fonte.

Comme on peut le voir sur la figure 2, le corps 2 de la biellette est formé de deux tôles (24a,24b). Chaque tôle (24a;24b) présente une première face sensiblement plane, non visible sur les figures représentées.

Pour former le corps de la biellette, les deux tôles (24a,24b) sont disposées face plane contre face plane et solidarisées.

Chaque tôle (24a;24b) présente une deuxième face (26a;26b) munie des reliefs sensiblement identiques pour les deux tôles.

Chaque tôle (24a;24b) comporte un manchon (5a;5b) s'étendant perpendiculairement depuis la deuxième face (26a;26b). Les deux manchons (5a,5b) forment l'ensemble du manchon 5 une fois les tôles (24a,24b) assemblées.

Les deux tôles (24a,24b) comportent également deux branches (12a,13a;12b,13b) et un pontet (15a;15b) qui forment la deuxième extrémité 4 du corps 2 de la bielle une fois les tôles assemblées.

Les branches (12a,13a;12b,13b) des tôles comportent des bossages (28a,29a;28b,29b) s'étendant selon l'axe longitudinal X et faisant saillie sur les deuxièmes faces (26a;26b) des deux tôles. Ces bossages permettent d'augmenter notablement la rigidité du corps de la biellette.

Pour augmenter la section transversale de la région centrale 18 du pontet 15, on peut prévoir des languettes (29a,29b) venues de matières depuis les bords de la région centrale des pontets (15a,15b) et rabattues sur les pontets contre les deuxièmes faces (26a,26b) des deux tôles (24a, 24b) .

La première tôle 24a comporte les languettes (30,31) respectivement venues de matières depuis les bords longitudinaux et depuis la partie intermédiaire 14a de ladite première tôle.

Grâce à cette disposition, on peut solidariser les deux tôles (24a,24b) en rabattant les languettes (30,31) de la première tôle 24a contre la deuxième face 26b de la deuxième tôle 24b. Bien entendu, on peut utiliser d'autres moyens, comme le soudage, pour solidariser les deux tôles.

Le fait d'utiliser deux tôles au lieu d'une tôle unique permet d'utiliser des tôles plus fines qui peuvent être travaillées avec un outillage moins lourd que celui nécessaire pour réaliser une biellette de rigidité équivalente avec une tôle unique. Par conséquent, l'utilisation de deux tôles permet de limiter le coût de fabrication de la biellette.

Comme représenté sur les figures 1 et 3, le corps 2 de la biellette est entièrement surmoulé par un élastomère, par exemple lors du moulage des corps en élastomère (9,17) des première et deuxième articulations (7,16). Ce surmoulage permet d'offrir une excellente protection du corps de la biellette contre la corrosion et participe dans une certaine mesure à l'insonorisation du véhicule.

## Revendications

1. Biellette antivibratoire destinée à isoler deux pièces et comprenant un corps rigide (2) s'étendant selon une direction longitudinale (X) entre une première extrémité (3) muni d'un manchon (5) et une deuxième extrémité (4), une première articulation antivibratoire (7) agencée dans ledit manchon (5) et présentant un axe central (Y) perpendiculaire à la direction longitudinale (X) dudit corps, et une deuxième articulation antivibratoire (16) agencée sur ladite deuxième extrémité et présentant un axe central (Z) perpendiculaire à l'axe central (Y) de la première articulation et perpendiculaire à la direction longitudinale (X),
**caractérisée en ce que** la deuxième extrémité (4) dudit corps (2) comporte deux branches (12,13) s'étendant à l'opposé du manchon (5) depuis une partie intermédiaire (14) du corps selon la direction longitudinale (X) et reliées entre elles par un pontet (15) s'étendant selon ledit axe central (Z) de la deuxième articulation, ladite deuxième articulation (16) étant agencée autour dudit pontet.

2. Biellette selon la revendication 1, dans laquelle la deuxième articulation (16) comprend un corps en élastomère (17) surmoulé sur le pontet.

3. Biellette selon la revendication 1 ou 2, dans laquelle le pontet (15) présente une région centrale (18) encadrée par deux régions latérales (19), ladite région centrale présentant une section transversale supérieure à la section transversale des régions latérales, la deuxième articulation (16) entourant ladite région centrale.

4. Biellette selon l'une quelconque des revendications 1 à 3, dans laquelle le pontet (15) est situé à une distance d de la partie intermédiaire (14) du corps (2), ladite distance d étant adaptée pour ménager un espace libre entre la deuxième articulation (16) et ladite partie intermédiaire (14).

5. Biellette selon l'une quelconque des revendications 1 à 4, dans laquelle la deuxième articulation (16) comporte un corps en élastomère (17) qui présente, par rapport à son axe central (Z), une section transversale adaptée pour être emprisonnée entre le creux d'une fourche (20) solidaire d'une des pièces à isoler et une chape (22) montée amovible sur les extrémités (21a,21b) de ladite fourche.

6. Biellette selon la revendication 5, dans laquelle la section transversale de la deuxième articulation (16) présente un contour en D.

7. Biellette selon l'une quelconque des revendications 1 à 6, dans laquelle le corps (2) est formé par au moins une tôle (24a;24b), comportant deux branches (12a,13a;12b,13b) et un pontet (15a;15b) qui forment au moins une partie des branches (12,13) et du pontet (15) du corps de la biellette.

8. Biellette selon la revendication 7, dans laquelle le manchon (5) de la première extrémité (3) du corps (2) est perpendiculaire au plan moyen de la tôle et le pontet (15) de la deuxième extrémité (4) du corps est compris dans le plan moyen de la tôle.

9. Biellette selon la revendication 7 ou 8, dans laquelle le corps est formé de deux tôles (24a,24b), chaque tôle (24a;24b) présentant une première face sensiblement plane, une première extrémité comportant un manchon (5a;5b) qui s'étend perpendiculairement depuis une deuxième face (26a;26b) de ladite tôle, et une deuxième extrémité comportant deux branches (12a,13a;12b,13b) reliées par un pontet (15a;15b), lesdites premières faces planes des tôles étant disposées l'une contre l'autre et les deux tôles (24a,24b) étant solidarisées pour former ledit corps (2).

10. Biellette selon la revendication 9, dans laquelle au moins l'une des deux tôles (24a;24b) comprend au moins une languette (29a;29b) venue de matière depuis la région centrale du pontet (15a;15b) de ladite tôle et rabattue sur ledit pontet contre la deuxième face (26a;26b) de ladite tôle.

11. Biellette selon la revendication 9 ou 10, dans laquelle au moins l'une des deux tôles (24a;24b) comprend des bossages (28a,29a;28b,29b) s'étendant le long des deux branches (12a,13a;12b,13b) de ladite tôle et faisant saillie sur la deuxième face (26a;26b) de ladite tôle.

12. Biellette selon l'une quelconque des revendications 9 à 11, dans laquelle au moins l'une des deux tôles (24a) comporte des languettes (30,31) venues de matière depuis les bords de ladite tôle et rabattues contre la deuxième face (26b) de la tôle adjacente (24b) .

13. Biellette selon l'une quelconque des revendications 1 à 12, dans laquelle le corps (2) est entièrement surmoulé par un élastomère.

## Patentansprüche

1. Schwingungsdämpfendes Verbindungsglied, das dazu bestimmt ist, zwei Teile voneinander zu isolieren, und das einen starren Körper (2) umfasst, der sich in einer Längsrichtung (X) zwischen einem ersten Ende (3), das mit einer Muffe (5) versehen ist, und einem zweiten Ende (4) erstreckt, ein erstes schwingungsdämpfendes Gelenk (7) umfasst, das in dieser Muffe (5) angebracht ist und dessen zentrale Achse (Y) im rechten Winkel zu der Längsrichtung (X) dieses Körpers verläuft, und ein zweites schwingungsdämpfendes Gelenk (16) umfasst, das an diesem zweiten Ende (4) angebracht ist und dessen zentrale Achse (Z) im rechten Winkel zu der zentralen Achse (Y) des ersten Gelenks sowie im rechten Winkel zu der Längsrichtung (X) verläuft,
**dadurch gekennzeichnet,**
**dass** das zweite Ende (4) dieses Körpers (2) zwei Schenkel (12, 13) aufweist, die sich von einem Zwischenteil (14) des Körpers aus in der Längsrichtung (X) von der Muffe (5) fort erstrecken und durch einen Bügel (15) miteinander verbunden sind, der sich entlang der
zentralen Achse (Z) des zweiten Gelenks erstreckt, wobei dieses zweite Gelenk (16) um den genannten Bügel herum angeordnet ist.

2. Schwingungsdämpfendes Verbindungsglied nach Anspruch 1, bei dem das zweite Gelenk (16) einen Elastomerkörper (17) umfasst, der auf den Bügel aufgeformt ist.

3. Schwingungsdämpfendes Verbindungsglied nach Anspruch 1 oder 2, bei dem der Bügel (15) einen zentralen Bereich (18) aufweist, der von zwei seitlichen Bereichen (19) umrahmt wird, wobei der Querschnitt dieses zentralen Bereichs größer ist als der Querschnitt der seitlichen Bereiche, wobei das zweite Gelenk (16) diesen zentralen Bereich umgibt.

4. Schwingungsdämpfendes Verbindungsglied nach einem der Ansprüche 1 bis 3, bei dem der Bügel (15) sich in einem Abstand d von dem Zwischenteil (14) des Körpers (2) befindet, wobei dieser Abstand d geeignet ist, einen Freiraum zwischen dem zweiten Gelenk (16) und diesem Zwischenteil (14) zu bilden.

5. Schwingungsdämpfendes Verbindungsglied nach einem der Ansprüche 1 bis 4, bei dem das zweite Gelenk (16) einen Elastomerkörper (17) umfasst, der bezogen auf seine zentrale Achse (Z) einen Querschnitt aufweist, der geeignet ist, in dem Hohlraum zwischen einer Gabel (20), die fest mit einem der voneinander zu isolierenden Teile verbunden ist, und einem Steg (22), der lösbar an den Enden (21a, 21b) dieser Gabel angebracht ist, eingeschlossen zu sein.

6. Schwingungsdämpfendes Verbindungsglied nach Anspruch 5, bei dem der Querschnitt des zweiten Gelenks (16) eine D-förmige Kontur aufweist.

7. Schwingungsdämpfendes Verbindungsglied nach einem der Ansprüche 1 bis 6, bei dem der Körper (2) von mindestens einem Blech (24a; 24b) gebildet wird, das zwei Schenkel (12a, 13a; 12b, 13b) und einen Bügel (15a; 15b) aufweist, die zumindest einen Teil der Schenkel (12, 13) und des Bügels (15) des Verbindungsgliedkörpers bilden.

8. Schwingungsdämpfendes Verbindungsglied nach Anspruch 7, bei dem die Muffe (5) des ersten Endes (3) des Körpers (2) im rechten Winkel zu der Mittelebene des Blechs liegt und der Bügel (15) des zweiten Endes (4) des Körpers sich in der Mittelebene des Blechs befindet.

9. Schwingungsdämpfendes Verbindungsglied nach Anspruch 7 oder 8, bei dem der Körper von zwei Blechen (24a, 24b) gebildet ist, wobei jedes Blech (24a; 24b) eine erste, im Wesentlichen ebene Seite, ein erstes Ende, das mit einer Muffe (5a; 5b) versehen ist, die sich im rechten Winkel von einer zweiten Seite (26a, 26b) dieses Blechs aus erstreckt, und ein zweites Ende mit zwei Schenkeln (12a, 13a; 12b, 13b), die durch einen Bügel (15a; 15b) miteinander verbunden sind, aufweist, wobei diese ersten ebenen Seiten der Bleche aneinanderliegend angeordnet sind und diese beiden Bleche (24a, 24b) fest miteinander verbunden sind, um den genannten Körper (2) zu bilden.

10. Schwingungsdämpfendes Verbindungsglied nach Anspruch 9, bei dem mindestens eines der beiden Bleche (24a; 24b) mindestens eine Zunge (29a; 29b) aufweist, die sich von dem zentralen Bereich des Bügels (15a; 15b) dieses Blechs aus in dem gleichen Werkstoff erstreckt und an diesem Bügel auf die zweite Seite (26a, 26b) dieses Blechs umgebogen ist.

11. Schwingungsdämpfendes Verbindungsglied nach Anspruch 9 oder 10, bei dem mindestens eines der beiden Bleche (24a; 24b) Höcker (28a, 29a; 28b, 29b) aufweist, die sich entlang der beiden Schenkel (12a, 13a; 12b, 13b) dieses Blechs erstrecken und über die zweite Seite (26a; 26b) dieses Blechs hinausstehen.

12. Schwingungsdämpfendes Verbindungsglied nach einem der Ansprüche 9 bis 11, bei dem mindestens eines der beiden Bleche (24a) Zungen (30, 31) aufweist, die sich von den Rändern dieses Blechs aus in dem gleichen Werkstoff erstrecken und auf die zweite Seite (26b) des anliegenden Blechs (24b) umgebogen sind.

13. Schwingungsdämpfendes Verbindungsglied nach einem der Ansprüche 1 bis 12, bei dem der Körper (2) vollständig mit einem Elastomer überformt ist.

## Claims

1. Antivibration connecting rod for isolating two parts and comprising a rigid body (2) extending in a longitudinal direction (X) between a first end (3) provided with a sleeve (5) and a second end (4), a first antivibration joint (7) arranged in said sleeve (5) and presenting a central axis (Y) perpendicular to the longitudinal direction (X) of said body, and a second antivibration joint (16) arranged on said second end and presenting a central axis (Z) perpendicular both to the central axis (Y) of the first joint and to the longitudinal direction,
**characterized in that** the second end (4) of said body (2) has two branches (12,13) extending from an intermediate portion (14) of the body away from the sleeve (5) along the longitudinal direction (X) and interconnected by a bridge (15) extending along said central axis (Z) of the second joint, said second joint (16) being arranged around said bridge.

2. Connecting rod according to claim 1, in which the second joint (16) comprises an elastomer (17) body overmolded on the bridge.

3. Connecting rod according to claim 1 or 2, in which the bridge (15) presents a central region (18) between two side regions (19), said central region presenting a cross-section that is greater than the cross-section of the side regions, the second joint (16) surrounding said central region.

4. Connecting rod according to any one of the claims 1 to 3, in which the bridge (15) is situated at a distance d from the intermediate portion (14) of the body (2), said distance d being adapted to leave an empty space between the second joint (16) and said intermediate portion (14).

5. Connecting rod according to any one of the claims 1 to 4, in which the second joint (16) comprises an elastomer body (17) presenting a cross-section about its central axis that is suitable for being held captive between the recess of a fork (20) secured to one of the parts to be isolated and a cover (22) removably mounted on the ends (21a,21b) of said fork.

6. Connecting rod according to claim 5, in which the cross-section of the second joint (16) presents a D-shaped outline.

7. Connecting rod according to any one of the claims 1 to 6, in which the body (2) is formed by at least one sheet-metal plate (24a;24b), comprising two branches (12a,13a;12b,13b) and a bridge (15a;15b) which form at least a portion of the branches (12,13) and of the bridge (15) of the body of the connecting rod.

8. Connecting rod according to claim 7, in which the sleeve (5) at the first end (3) of the body (2) is perpendicular to the mean plane of the sheet, and the bridge (15) at the second end (4) of the body lies in the mean plane of the sheet.

9. Connecting rod according to claim 7 or 8, in which the body is formed of two sheet-metal plates (24a,24b), each plate (24a;24b) presenting a first face that is substantially plane, a first end having a sleeve (5a;5b) extending perpendicularly from a second face (26a;26b) of said plate, and a second end comprising two branches (12a,13a;12b,13b) interconnected by a bridge (15a;15b), said plane first faces of the plates being placed against each other and the two plates (24a,24b) being bonded together to form said body.

10. Connecting rod according to claim 9, in which at least one of the two plates (24a;24b) includes at least one tongue (29a;29b) extending integrally from the central region of the bridge (15a;15b) of said plate and folded over onto said bridge against the second face (26a;26b) of said plate.

11. Connecting rod according to claim 9 or 10, in which at least one of the two plates (24a;24b) includes ridges (28a,29a;28b,29b) extending along both branches (12a,13a;12b,13b) of said plate and projecting from the second face (26a;26b) of said plate.

12. Connecting rod according to any one of the claims 9 to 11, in which at least one of the two plates (24a) has tongues (30,31) integral with the edges of said plate and folded over the second face (26b) of the adjacent plate (24b).

13. Connecting rod according to any one of the claims 1 to 12, in which the body (2) is completely overmolded in an elastomer.
